# FASCICULE DE BREVET EUROPEEN

(11) **EP 3 555 587 B1**
(45) Date de publication et mention de la délivrance du brevet: **19.07.2023**
(21) Numéro de dépôt: 17832513.0
(22) Date de dépôt: 19.12.2017
(51) Int. Cl.: G01N 1/28, G01N 1/40

(54) **PROCEDE DE DÉPOT D'UN ECHANTILLON SANGUIN SUR UN PAPIER BUVARD ET ENSUITE D'EXTRACTION MÉCHANIQUE DE L'ECHANTILLON SANGUIN**
VERFAHREN ZUM AUFBRINGEN EINER BLUTPROBE AUF LÖSCHPAPIER UND DANACH AUF MECHANISCHE WEISE EXTRAHIEREN DER PLUTPROBE
METHOD FOR DEPOSITING A BLOOD SAMPLE ON BLOTTING PAPER AND MECHANICALLY EXTRACTING THE SAMPLE AFTERWARDS

(30) Priorité: 19.12.2016 FR 1662710
(43) Date de publication de la demande: 23.10.2019
(73) Titulaire: bioMérieux, 69280 Marcy-l'Étoile (FR)
(72) Inventeur: BOUCHARD-LOVIGHI, Ghislaine, 69003 Lyon (FR); FOUCAULT, Frédéric, 69280 Marcy l'Etoile (FR)
(74) Mandataire: bioMérieux PI Groupement mandataires
(86) Numéro de dépôt international: PCT/FR2017/053681
(87) Numéro de publication internationale: WO 2018/115707

(56) Documents cités:
- BENNY BORREMANS: "Ammonium improves elution of fixed dried blood spots without affecting immunofluorescence assay quality", TROPICAL MEDICINE AND INTERNATIONAL HEALTH., vol. 19, no. 4, 6 janvier 2014 (2014-01-06), pages 413-416, XP055398066, GB ISSN: 1360-2276, DOI: 10.1111/tmi.12259
- R DACHRAOUI ET AL: "RNA amplification of the HIV-1 Pol and env regions on dried serum and plasma spots", HIV MEDICINE, vol. 9, no. 7, 31 décembre 2008 (2008-12-31), pages 557-561, XP055397933, GB ISSN: 1464-2662, DOI: 10.1111/j.1468-1293.2008.00604.x

## Description

La présente invention concerne le domaine médical en général, et en particulier le domaine du diagnostic *in vitro.* Elle a trait plus spécifiquement à l'extraction des analytes contenus dans un échantillon sanguin préalablement séché sur papier buvard comme utilisé dans la technologie DBS.

Il y a maintenant plus d'un siècle, Ivar Bang décrivait une méthode de prélèvement sanguin capillaire non invasive séché sur papier buvard pour l'estimation de la teneur en glucose comme alternative au prélèvement sanguin classique, veineux, stockés dans des tubes. Cette technologie, appelée le « *Dried Blood Spot »* ou DBS, est basée sur le dépôt d'une goutte de sang sur un papier buvard adapté et qui est séché avant conservation et analyse.

En 1963, Robert Guthrie et al. (A simple phenylalanine method for detecting phenylketonuria in large populations of newborn infants. Pediatrics.1963; 32: 338-343) ont utilisé cette technologie pour développer le dépistage néonatal systématique de la phénylcétonurie. Mise en place pour la première fois en Ecosse, l'utilisation du DBS a été étendue chez le nourrisson au Royaume-Uni dans les années 70, principalement pour détecter les erreurs innées du métabolisme qui peuvent faire l'objet d'une prise en charge thérapeutique. Actuellement, l'utilisation du DBS reste presque exclusivement limitée au dépistage néonatal.

En France, le prélèvement capillaire et sa préservation sur papier buvard a été mis en place en 1978 par l'Association française de dépistage et de prévention des handicaps de l'enfant. Le prélèvement de sang capillaire chez les nouveau-nés permet en plus de la détection de la phénylcétonurie, la détection de l'hypothyroïdie congénitale, l'hyperplasie congénitale des surrénales, la mucoviscidose ou encore de la drépanocytose.

Ainsi, le principe de la technologie DBS repose sur le prélèvement d'un échantillon sanguin, l'application de l'échantillon prélevé sur un papier buvard, sa conservation puis l'extraction des analytes contenus dans cet échantillon séché sur papier buvard pour effectuer une analyse de ces analytes.

A l'heure actuelle, il s'agit d'un prélèvement capillaire qui se fait au niveau du doigt ou du talon chez le nourrisson. La peau est percée à l'aide d'un outil tel qu'une lancette stérile puis des gouttes de sang sont déposées dans des cercles imprimés sur le papier buvard. Une fois que tous les cercles imprimés sont remplis, le papier buvard est séché pendant quelques heures à température ambiante.

Une fois séchés, pour leur conservation les papiers buvards sont placés dans un sac plastique étanche, éventuellement avec un sachet de dessicant et un indicateur d'humidité. Le dessicant vise à parachever le processus de séchage afin de réduire tout risque d'infection lié au prélèvement sanguin. Le temps de conservation possible à température ambiante varie selon la nature de l'analyte, d'une semaine pour les protéines à un an ou plus pour les acides nucléiques.

L'extraction des analytes des papiers buvards doit être réalisée en utilisant une procédure standardisée. Un ou plusieurs disques de papier buvard de diamètres variables sont découpés avec un emporte-pièce spécifique. Ces disques sont alors placés dans un large volume de tampon d'élution pendant une durée variable selon la procédure d'extraction. La nature et le volume du tampon d'élution joue un rôle majeur dans la resolubilisation des analytes à tester. Une grande variété de tampons d'élution a été décrite dans la littérature dont les plus communs sont des tampons salins, souvent supplémentés avec des détergents (tween, triton), des protéines porteuses (albumine) et des chélateurs (EDTA). Les solvants organiques (acétonitrile, méthanol ou éthanol) sont aussi de bons tampons d'élution pour l'extraction des protéines par exemple.

Par la suite, la technologie DBS peut être le support de plusieurs analyses. En effet, à partir de cette technologie des analyses telles qu'un sérodiagnostic, un diagnostic moléculaire pédiatrique précoce, une quantification de la charge virale circulante mais également un génotypage de résistance, peuvent être réalisées.

Dans le cadre d'un sérodiagnostic, la détection des anticorps peut être réalisée par ELISA ou tests rapides après élution des DBS dans un tampon. Cette procédure est surtout utilisée pour les études épidémiologiques. Ce type d'analyse nécessite de petites quantités d'échantillons, de l'ordre de 50 µL.

L'augmentation des demandes de diagnostiques biologiques a favorisé l'apparition d'automates de plus en plus rapides et fiables au sein des laboratoires d'analyses médicales. Les automates d'immunoanalyse permettent le dosage de marqueurs cardiaques, thyroïdiens, tumoraux, de fertilité, d'anémie ou encore la détermination des sérologies infectieuses.

L'utilisation de ces automates d'immunoanalyse nécessite de plus grands volumes de sang que ne le permet un prélèvement sanguin capillaire. En effet dans ces automates d'immunoanalyse les volumes d'échantillon sanguin peuvent aller d'une centaine jusqu'à plusieurs centaines de microlitres pour une analyse.

En effet, il important de noter que les échantillons de sang recueillis pour effectuer un DBS sont de l'ordre de quelques microlitres. Cette quantité est suffisante pour certaines analyses sur l'ADN en général mais s'avère insuffisante pour l'analyse sur automates d'immunoanalyse. Le principal inconvénient de la technologie DBS est lié aux faibles quantités de sang collecté disponible pour le tests, et aux difficultés rencontrées au niveau des laboratoires pour en extraire le maximum de matériel possible sans risque de contamination (Dachraoui R et al., RNA amplification of the HIV-1 Pol and env regions on dried serum and plasma spots, HIV MED., 2008 ; 9:557-61).

A l'heure actuelle, pour extraire un maximum de matériel à partir d'un DBS des volumes très élevés de tampons sont utilisés. Dans les travaux de Dachraoui et al. ou encore ceux de Borremans (Ammonium improves elution of fixed dried blood spots without affecting immunofluorescence assay quality, Trop Med Int Health. 2014 Apr;19(4):413-6) les volumes de tampons utilisés sont de 10 à 30 fois plus élevés que les volumes d'échantillon déposé et séché sur le DBS. Ainsi l'échantillon récupéré se retrouve fortement dilué en analytes par rapport à l'échantillon initial. Cette dilution de l'échantillon initial a pour conséquence de diminuer la sensibilité de l'analyse de l'échantillon récupéré ou même pire risque de modifier le statut clinique de l'échantillon. Modifier le statut clinique signifie que pour un échantillon initial, avant séchage sur papier buvard, positif pour une infection virale donnée, l'échantillon récupéré après une extraction comme utilisé dans la technologie DBS devient négatif pour cette même infection. En effet un analyte présent en faible quantité dans l'échantillon déposé sur le DBS pourrait se retrouver sous le seuil de détection dans un échantillon dilué.

Par conséquent pour pouvoir être analysé sur des automates d'immunoanalyse l'utilisation du papier buvard comme dans la technologie DBS nécessite des adaptations. Tout d'abord pour récupérer des volumes importants d'échantillon pour l'analyse sur automate il faut que le volume initial d'échantillon soit suffisant. Ainsi il est nécessaire pour que cela fonctionne que le papier puisse être capable d'absorber mais également de restituer un volume suffisant d'échantillon. Le tout sans que l'échantillon récupéré soit dilué par rapport à l'échantillon initial.

Un volume plus important d'échantillon a pour conséquence une absorption plus importante et plus en profondeur de l'échantillon à analyser. Les analytes se retrouvent par conséquent piégés entre les fibres du papier buvard. Ainsi la principale difficulté réside dans l'extraction de ces analytes emprisonnés dans le papier buvard, après séchage de l'échantillon, de manière efficace sans dénaturer ces analytes à analyser permettant ainsi de conserver le statut clinique de l'échantillon initial. En effet il est crucial que pour un échantillon initial positif pour une infection virale, l'échantillon récupéré après une extraction à partir d'un DBS reste positif pour cette même infection. Et de la même manière si l'échantillon initial est négatif pour une infection, l'échantillon récupéré après extraction doit l'être aussi.

Ainsi pour pouvoir conserver le statut clinique, le procédé doit permettre de réaliser une extraction aussi bien quantitative que qualitative des analytes absorbés dans le papier buvard.

De plus, il est important de noter également que le sang est un tissu conjonctif, milieu complexe constitué de liquide (plasma), de cellules (globules rouges, globules blancs et plaquettes), et de fibres (le fibrinogène qui a un rôle dans la coagulation du sang). Cette constitution a un impact sur la structure des analytes contenus dans l'échantillon sanguin. Ainsi le statut clinique risque également d'être impacté par la constitution de l'échantillon récupéré après extraction. En effet l'échantillon récupéré après extraction doit avoir une constitution similaire à l'échantillon sanguin initial. Autrement dit l'échantillon récupéré doit mimer la matrice sanguine de l'échantillon initial. L'environnement des analytes dans la solution d'extraction doit être chimiquement proche de leur environnement dans l'échantillon sanguin. Cela permet de conserver la conformation dans l'espace de ces analytes. Ceci revêt une importance capitale dans le cadre d'un immunodosage lorsque que l'épitope est dit conformationnel.

Il existe ainsi un réel besoin de disposer d'un procédé permettant l'extraction efficace et sans dénaturation des analytes contenus dans un échantillon sanguin séché sur papier buvard à des fins d'analyses sur des automates présents dans les laboratoires d'analyses médicales tout en conservant le statut clinique de l'échantillon initial.

Ainsi la présente invention a pour objet un procédé de mise en suspension des analytes contenus dans un échantillon sanguin préalablement séché sur un papier buvard, dans lequel :
- on dispose d'un papier buvard sur lequel un échantillon sanguin, d'un volume initial supérieur ou égal à 100 µL, est séché, ledit papier buvard ayant une capacité d'absorption dudit échantillon d'au moins 60 µL.cm⁻² et un grammage compris entre 200 g.m⁻² et 800 g.m⁻² ;
- on transfert ledit papier buvard dans un récipient ;
- on ajoute une solution d'extraction liquide dans ledit récipient, ladite solution d'extraction étant choisie parmi :
   ∘ un tampon phosphate salin ayant une concentration en phosphate comprise entre 10 mmol.L⁻¹ et 150 mmol.L⁻¹ et une concentration en chlorure de sodium comprise entre 150 mmol.L⁻¹ et 350 mmol.L⁻¹ et
   ∘ un tampon tris salin ayant une concentration en tris comprise 10 mmol.L⁻¹ et 150 mmol.L⁻¹ et une concentration en chlorure de sodium comprise entre 150 mmol.L⁻¹ et 350 mmol.L⁻¹,
   ladite solution d'extraction ayant un volume équivalent au volume d'échantillon sanguin séché sur le papier buvard ;
- on laisse imprégner ledit papier buvard dans la solution d'extraction ;
- on exerce une action mécanique d'essorage sur le papier contenu dans le récipient ;
   et
- on récupère la solution d'extraction comprenant les analytes contenus dans l'échantillon sanguin initial.

La demanderesse a donc montré, contre toute attente, que le procédé selon l'invention facile à mettre en oeuvre et ergonomique, permet le rendu d'un résultat conservant le statut clinique (positif, négatif ou équivoque) de l'échantillon.

Avant d'aller plus loin dans la description de l'invention, les définitions ci-après sont données afin d'en faciliter la compréhension.

D'une manière générale, le terme « échantillon » se réfère à une partie ou à une quantité, plus particulièrement une petite partie ou une petite quantité, prélevée à partir d'une ou plusieurs entités aux fins d'analyse. Cet échantillon peut éventuellement avoir subi un traitement préalable, impliquant par exemple des étapes de mélange ou de dilution.

L'échantillon dans le cadre du procédé de l'invention est un échantillon biologique, d'origine humaine (ou animale), correspondant à des prélèvements de fluide biologique sanguin (sang total ou dérivés tels que sérum ou plasma).

L'échantillon analysé est, en général, susceptible, ou suspecté, de contenir au moins un analyte représentatif de la présence de microorganismes ou d'une maladie à détecter, caractériser ou suivre.

L'objectif de la présente invention est la mise en suspension des analytes contenus dans un échantillon sanguin séché dans un papier buvard selon la technologie Dried Blood Spot (DBS).

Le terme analyte désigne une substance d'origine biologique, contenue dans un échantillon, détectée, identifiée et/ou quantifiée par une analyse. Il doit être compris, au sens large, comme désignant une substance chimique, biologique ou biochimique qui fait l'objet d'une ou plusieurs analyses. A titre d'exemple d'analytes, on peut citer une protéine ou un peptide.

L'analyte sera représentatif d'un état pathologique. Par état pathologique, on entend tout état de santé altéré d'un patient, dû à des maladies causées par de nombreux facteurs tels que les facteurs environnementaux (infectieux). A titre d'exemples de maladies, on peut citer les maladies infectieuses, dues à des microorganismes tels que virus de la grippe, de la dengue ou encore Ebola. Les analytes sont alors associés aux diverses maladies. A titre d'exemple d'analyte, on peut citer l'antigène p24 et les anticorps anti VIH-1 et VIH-2 utiles en tant qu'analytes pour le virus du SIDA ou encore l'antigène HBs et l'anticorps anti HBs en tant qu'analytes du virus de l'hépatite B.

L'analyte présent dans un échantillon est destiné à être détecté, quantifié, analysé, caractérisé ou encore évalué.

Au sens de la présente invention le papier buvard est un papier poreux capable d'absorber par capillarité une certaine quantité de liquide.

Un papier buvard, selon la présente invention, s'entend par un matériau fibreux constitué en partie ou en totalité de fibres. Ces fibres peuvent être assemblées de manière ordonnée ou aléatoire (c'est-à-dire un tissé ou un non-tissé). Ce matériau qui a la capacité d'absorber les liquides aqueux peut être composé d'un seul type de fibre, d'un mélange de fibres appartenant ou non à la même classe.

Les fibres peuvent être classées selon leur composition chimique (minérale ou organique) et de leur origine (naturelle ou artificielle). A titre d'exemple on peut citer la fibre de verre comme fibre minérale artificielle ou encore la fibre cellulosique (coton) comme fibres organiques naturelles d'origine végétale.

Dans le cadre de l'invention le papier buvard a une capacité d'absorption d'un échantillon sanguin d'au moins 60 µL.cm⁻². On considère selon l'invention que le papier buvard doit être capable d'absorber une composition liquide ayant les propriétés physiques de viscosité d'un échantillon de sang fraichement prélevé. Par exemple la viscosité de l'échantillon sanguin est comprise entre de 4 à 25 × 10⁻³ pascal-secondes (Pa.s).

Selon le procédé de l'invention le papier buvard a un grammage compris entre 200 g.m⁻² et 800 g.m⁻². Le grammage, également appelé « force du papier », est une grandeur caractérisant un papier ou un carton, correspondant à sa masse surfacique, c'est-à-dire à sa masse par unité de surface. Le grammage est défini par les normes ISO 536 et 4046.

Par « solution d'extraction », on entend une solution permettant la mise en solution des analytes à partir échantillon sanguin séché dans un papier buvard. Cette solution, dans le cadre de l'invention, a une double fonction. Dans un premier temps elle a pour rôle d'extraire les analytes absorbés dans le papier buvard sans les dénaturer. Puis cette solution d'extraction, de par sa constitution, doit permettre de mimer la matrice sanguine dans le but *in fine* d'en permettre une analyse sur automates. Le tout permettant de conserver le statut clinique de l'échantillon initial.

Selon la présente invention la solution d'extraction est choisie parmi le tampon phosphate salin (PBS) et le tampon tris salin (TBS).

Le tampon phosphate salin, ou PBS, est une solution tampon largement connue de l'Homme du métier. Il s'agit d'un soluté physiologique contenant du chlorure de sodium, du phosphate disodique, du phosphate monopotassique et du chlorure de potassium.

Dans le cadre de la présente invention le tampon phosphate salin a une concentration en phosphate comprise entre 10 mmol.L⁻¹ et 150 mmol.L⁻¹ et une concentration en chlorure de sodium comprise entre 150 mmol.L⁻¹ et 350 mmol.L⁻¹.

La préparation de ce type de solution est largement connue de l'homme du métier. A titre d'exemple, on peut préparer une solution tampon phosphate salin de 1 litre ayant une concentration en phosphate de 10 mmol.L⁻¹ et une concentration en chlorure de sodium de 137 mmol.L⁻¹ d'un pH 7,4, en dissolvant :
- 1.44g de phosphate disodique (Na₂HPO₄) de concentration 10 mmol.L⁻¹,
- 0.24g de phosphate de monopotassium (KH₂PO₄) de concentration 2 mmol.L⁻¹,
- 8g de chlorure de sodium (NaCl) de concentration 137 mmol.L⁻¹, et
- 0.2g de chlorure de potassium (KCl) de concentration 2.7 mmol.L⁻¹,
dans 800 ml d'eau (H₂O), puis ajuster le pH à 7,4 à l'aide de chlorure d'hydrogène (HCl) et compléter avec de l'eau distillé jusqu'à 1 litre.

Le tampon tris salin, ou TBS, est également une solution tampon largement connue de l'Homme du métier. Ce tampon contient du trishydroxyméthylaminométhane, ou tris, et du chlorure de sodium. Dans le cadre de la présente invention le tampon tris salin a une concentration en tris comprise entre 10 mmol.L⁻¹ et 150 mmol.L⁻¹ et une concentration en chlorure de sodium comprise entre 150 mmol.L⁻¹ et 350 mmol.L⁻¹.

La préparation de ce type de solution est largement connue de l'homme du métier. A titre d'exemple, on peut préparer une solution tampon tris salin de 1 litre ayant une concentration en tris de 50 mmol.L⁻¹ et une concentration en chlorure de sodium de 150 mmol.L⁻¹ d'un pH 7,5, en dissolvant :
- 6.05 g de Tris de concentration 50 mmol.L⁻¹, et
- 8.76 g de chlorure de sodium (NaCl) de concentration 150 mmol.L⁻¹,
dans 800 ml d'eau (H₂O), puis en ajustant le pH à 7,5 à l'aide de chlorure d'hydrogène (HCl) de concentration 1 mol.L⁻¹ et en complétant avec de l'eau distillé jusqu'à 1 litre.

Dans le cadre de la présente invention, le volume de solution d'extraction est équivalent au volume d'échantillon initial avant séchage dans le papier buvard. Ceci ayant pour effet technique de ne pas diluer l'échantillon récupéré à l'aide du procédé selon l'invention par rapport à l'échantillon initial déposé et séché sur le papier buvard ce qui permet d'améliorer ainsi la sensibilité du procédé et de conserver le statut clinique de l'échantillon.

La sensibilité représente le pourcentage de « vrais positifs » parmi la totalité des positifs, reconnus comme tels. Elle exprime l'aptitude du test à détecter les échantillons biologiques réellement positifs, qui correspondent à la pathologie. Dans un langage « probabiliste », elle correspond à la probabilité d'observer un résultat positif sachant l'échantillon positif.

Par « équivalent » on entend que le rapport entre le volume le moins élevé et le plus élevé est compris entre 0,8 et 1.

Comme expliqué précédemment la solution d'extraction, dans le cadre de l'invention, a deux fonctions distinctes qui agissent de façon synergique dans le but de permettre la conservation du statut clinique. Le premier étant de permettre la mise en solution des analytes contenus dans un échantillon préalablement séché sur un papier buvard sans les dénaturer. Et le second étant de mimer la matrice sanguine pour permettre son analyse sur automates d'immunoanalyse. Les éléments qui constituent cette solution d'extraction lui permettent de remplir ces deux fonctions dans le but *in fine* de conserver le statut clinique.

Comme illustrer dans les exemples, le tampon salin a pour mission principale la mise en suspension des analytes sans les dénaturer quand le chlorure de sodium à des concentrations comprises entre 150 mmol.L⁻¹ et 350 mmol.L⁻¹ permet de reproduire des conditions physiologiques.

Avantageusement et selon l'invention la solution d'extraction a un pH compris entre 7,2 et 7,5 et de préférence entre 7,3 et 7,4.

Dans un premier mode de réalisation la solution d'extraction comprend en outre un ou plusieurs éléments choisis parmi la liste suivante : un détergent, une protéine porteuse, un chélateur d'ions et de la poudre de lait.

Les détergents utilisés dans les laboratoires de biologie et de biochimie sont des tensioactifs doux utilisés pour la lyse des membranes cellulaires et la dissolution du matériel intracellulaire en une forme soluble. Leurs applications principales sont la dissociation des interactions protéine-protéine, protéine-lipide et lipide-lipide, la dénaturation de la structure protéique et la prévention des liaisons non spécifiques dans les approches immunochimiques et de cristallisation de protéines. Plusieurs types de détergents existent et sont regroupés selon leurs propriétés. Le détergent favorise la mise en solution des analytes, contenus dans un échantillon séché, piégés dans les fibres du papier buvard. Cette mise en solution doit se faire sans dénaturer les analytes.

Selon un mode de réalisation préférentielle de l'invention, le détergent est un détergent non-ionique et est choisi parmi ceux utilisés habituellement dans les tampons d'élution et largement connu de l'homme du métier. A titre d'exemple on peut citer le polyéthylène glycol sorbitan monolaurate, également appelé Tween 20, ou encore le Triton X-100.

La protéine porteuse a pour rôle de recréer dans l'échantillon extrait du papier buvard la viscosité d'un échantillon sanguin. A titre d'exemple on peut citer l'albumine de sérum bovin (BSA).

Quant aux réactifs chélateurs de métaux tels que l'EDTA ou l'EGTA, ils se lient aux ions Mg²⁺ et, ainsi, empêchent le clivage des protéines par des métalloprotéases contaminantes. Ainsi elles ont pour rôle de permettre de conserver la conformation des analytes qui seront repris dans la solution d'extraction. Ceci a pour but *in fine* de conserver le statut clinique de l'échantillon initial.

Dans une alternative de l'invention, la solution d'extraction comprend un solvant organique. Les solvants organiques utilisés en tant que tampon d'élution sont largement connu de l'homme du métier. A titre d'exemple on peut citer l'acétonitrile, le méthanol ou encore éthanol.

Le terme « essorage » selon présente invention s'entend par l'opération consistant à retirer d'un papier buvard un liquide qui l'imprègne, par une action mécanique.

Enfin l'expression « exercer une action d'essorage sur le papier buvard », fait référence à une action mécanique à distance ou de contact qui peut être localisée ou répartie susceptible de déformer un corps tel qu'un matériau fibreux. Dans un mode de réalisation de l'invention, la durée de ré-imprégnation du papier par la solution d'extraction est comprise entre 1 minute et 3 minutes, de préférence est de 2 minutes.

Selon une variante de réalisation de l'invention, le papier buvard est un matériau fibreux non tissé comprenant des fibres choisies parmi les fibres de celluloses et les fibres de verres, préférentiellement des fibres de celluloses.

Avantageusement, le papier buvard a une épaisseur comprise entre 0,8 mm à 2,50 mm.

Dans un mode de réalisation de l'invention, le papier buvard est sous forme de disque.

De manière préférée, le papier est séché à des températures comprises entre 25 et 45°C et à des pourcentages d'humidité compris entre 10 et 30%.

Selon l'invention l'action mécanique est exercée sur le papier buvard a une force comprise entre 80 N et 120 N.

Avantageusement, l'action mécanique d'essorage sur le papier se fait par centrifugation, par sonication ou par pression mécanique automatique ou manuelle, de préférence par pression mécanique manuelle. L'action mécanique d'essorage est réalisée tout en conservant l'intégrité du papier. Autrement dit cette action mécanique d'essorage s'effectue sans délitement du papier.

Selon un mode de réalisation de l'invention, le récipient est apte à coopérer avec un moyen coulissant à l'intérieur dudit récipient, ledit moyen étant imperméable aux liquides et assurant une étanchéité avec les parois latérales du récipient.

De manière préférentielle, le papier buvard comprenant l'échantillon sanguin séché est conservé dans un contenant étanche et ce dernier peut contenir un absorbeur d'humidité.

Selon un nouveau mode de réalisation de l'invention, le procédé comprend en outre une analyse de l'échantillon récupéré comprenant les analytes par immunoessai.

Un autre objet de la présente invention est un procédé d'analyse d'un échantillon sanguin préalablement séché sur un papier buvard, ledit procédé comprenant :
- la mise en suspension des analytes contenus dans un échantillon sanguin préalablement séché sur un papier buvard en mettant en oeuvre le procédé de mise en suspension des analytes selon l'invention, et
- l'analyse de la solution d'extraction récupérée comprenant les analytes contenus dans l'échantillon sanguin initial.

Par analyse on entend la détermination de la présence ou de l'absence d'un analyte ou la détermination de la quantité, ou dose, d'un analyte dans la solution d'extraction récupérée.

La détermination de la présence ou de l'absence et de la dose d'un analyte peut se faire selon les techniques largement connues de l'homme du métier. A titre d'exemples, on peut citer les dosages par immunoessais, tels qu'ELISA (Enzyme Linked Immuno Sorbent Assay), ELFA (Enzyme Linked Fluorescent Assay) et RIA (Radio Immuno Assay).

Le dosage par immunoessai est une méthode bien connue de l'homme du métier et largement utilisée dans le domaine de l'analyse d'échantillons biologiques. Il permet de détecter des analytes dans des échantillons sous forme notamment de protéines (antigènes/anticorps), de peptides et d'haptènes, comme par exemple les stéroïdes ou les vitamines, impliquant des réactions immunologiques entre l'analyte à détecter, et un ou des partenaire(s) de liaison à cet analyte. Pour la détermination de la quantité, ces méthodes d'immunoessai sont basées sur des mesures permettant quantifier les signaux émis au cours de l'analyse de l'échantillon biologique. La quantité de signaux détectée est généralement proportionnelle à la quantité, ou dose, d'analyte à mesurer (par exemple lors d'un dosage en sandwich) ou inversement proportionnelle à la quantité, ou dose, d'analyte à mesurer (par exemple dosage en compétition).

Selon un mode de réalisation l'analyse de l'échantillon de la solution d'extraction comprenant les analytes se fait par une technologie choisie parmi la chimiluminescence, la fluorescence, ELISA, EIA, par multiplexage, par biopuces, immunochromatographique, billes magnétiques et radio-immunoanalyse.

D'autres buts, caractéristiques et avantages de l'invention apparaîtront au vu de la description qui va suivre et des exemples développés ci-après, qui se réfèrent aux figures annexées et dans lesquelles :
- les Figures 1 et 2 sont des représentations schématisées d'un dispositif 1 permettant d'exercer l'action mécanique d'essorage sur le papier selon le procédé de l'invention, et de son principe général d'utilisation ;
- la Figures 3 est une représentation schématisée d'un autre dispositif 2 permettant également d'exercer l'action mécanique d'essorage , et de son principe général d'utilisation.

Ces exemples ont pour but de faciliter la compréhension de l'invention, sa mise en oeuvre et son utilisation. Ces exemples sont donnés à titre explicatif et ne sauraient limiter la portée de l'invention.

L'invention sera mieux comprise à l'aide des exemples suivants qui sont donnés à titre illustratif et non limitatif.

### EXEMPLES

### I. Faisabilité avec le virus de la varicelle

La varicelle est une maladie infantile très contagieuse à forte prévalence en France (> 98%).

A titre illustratif, l'analyse des échantillons a été effectuée à l'aide de l'automate d'immunoanalyse commercialisé par l'entreprise bioMérieux, le système VIDAS^{®}. Le test VIDAS^{®} VZG (virus varicelle-zona) est une aide au diagnostic d'une infection au virus de la varicelle, il permet la détection de l'immunoglobuline G.

Le VIDAS^{®} est un automate multiparamétrique d'immunoanalyses. Il s'agit d'un système fermé pour tests unitaires, offrant une grande flexibilité. Cet automate se caractérise par sa robustesse, sa flexibilité, sa facilité d'utilisation et est destiné aux laboratoires de petite et moyenne taille. Il permet de réaliser des tests de routine, de confirmation et des tests à forte valeur médicale.

La détection se fait par la technique ELFA (Enzyme Linked Fluorescent Assay) dans le sérum ou le plasma. Le principe de dosage ELFA correspond à la combinaison de réactions immunoenzymatiques à une détection en point final en fluorescence. L'enzyme utilisée est la phosphatase alcaline qui catalyse la réaction d'hydrolyse du substrat, le 4-méthyl-ombelliferyl phosphate en un produit ; le 4-méthyl-ombellierone. Le produit émet à une longueur d'onde de 450 nm après excitation à 370 nm. Les résultats sont analysés automatiquement par le VIDAS^{®} et exprimés en intensité de fluorescence relative ou RFV

(pour « Relative Fluorescent Value »). Cette valeur de RFV est déterminée en soustrayant la valeur du bruit de fond (BKG) à la valeur brute obtenue.

Dans un premier temps, il a été étudié les caractéristiques du papier et de la solution d'extraction nécessaire au bon déroulement du procédé selon l'invention.

Dans cette partie, l'objectif sera la mise en solution des analytes d'intérêt dans la solution d'extraction pour la mise en oeuvre dans un test VIDAS^{®} VZG.

Pour permettre sa mise en place dans des conditions difficiles de prélèvement, de stockage, de transport et enfin d'analyse ce procédé selon l'invention doit être facile à mettre en oeuvre, ergonomique et permettre le rendu d'un résultat conservant le statut clinique (positif, négatif ou équivoque) de l'échantillon.

### a) Capacité d'absorption des papiers

Le papier 903 de chez Whatman^{®} est classiquement utilisé lors de l'application sur papier buvard, dans le cadre de la technologie DBS, en biologie moléculaire. Ce papier très fin est adapté à la manipulation d'une à trois gouttes de sang. Dans ce cas de figure, un faible volume est suffisant car les acides nucléiques à rechercher sont soumis à une amplification par PCR.

Dans un contexte de diagnostic sérologique utilisant un automate d'immunoanalyse il est nécessaire de travailler avec un papier permettant de déposer et de récupérer un volume plus important de prélèvement sanguin. Les tests VIDAS^{®}, par exemple, nécessitent 100 µL de sérum pour le test sur le virus de l'hépatite C (HCV), 150 µL pour le test sur le virus de l'hépatite B (HBV) et 200 µL pour les test sur le virus du SIDA (HIV). Ces volumes sont sensiblement équivalents pour les autres tests sur automates présents sur le marché.

Ainsi, le papier doit donc être capable d'absorber mais aussi de restituer un volume suffisant d'échantillon, immédiatement après séchage ou après un temps de stockage.

Afin de sélectionner le papier le plus adapté à la méthode, une étude est réalisée sur 6 types de papier fournis par l'entreprise Ahlstrom^{®} (TNF, 226, 222, 350, 270 et 320). Ces papiers se caractérisent par leur grammage, leur poids et leur épaisseur. Les papiers TNF et 226 ont des caractéristiques similaire au papier 903 de chez Whatman^{®} qui est classiquement utilisé dans le cadre de la technologie DBS.

**Tableau 1 : Caractéristiques des papiers et représentation schématique des épaisseurs**

| Référence (Grade) | Composition | Grammage (g/m²) | Epaisseur (mm) |
|---|---|---|---|
| 167L | Coton | 360 | 1 |
| 226 | Coton | 179 | 0,52 |
| 222 | Coton | 291,3 | 0,82 |
| 270 | Coton | 438,8 | 1,81 |
| 320 | Coton | 702 | 2,47 |
| 350 | Coton | 224,6 | 1,39 |
| TNF | Coton | 179 | 0,48 |

Le papier doit posséder certaines caractéristiques. En effet, il doit être de surface plane et homogène, permettant une diffusion uniforme de l'échantillon sanguin sur toute sa surface au moment du dépôt.

De plus, le papier doit être facilement manipulable, avec une durée de séchage raisonnable estimée à deux heures, donc ne pas être d'une trop grande épaisseur.

Le diamètre des disques est un facteur important. Chaque papier présente un volume limite à ne pas dépasser car au-delà, le papier n'absorbe plus l'échantillon. Il faut donc définir précisément le diamètre des disques. Le tableau ci-dessous représente le volume maximum absorbable pour les papiers de grades 222 et 270.

**Tableau 2 : Volume absorbable par les papiers en fonction du diamètre**

| Grade papier | 222 | | 270 | |
|---|---|---|---|---|
| Diamètre des disques (mm) | 20 | 19,5 | 20 | 19,5 |
| Volume de sérum déposé (µL) | 300 | 250 | 500 | 450 |

Les résultats montrent qu'une variation de 0,5 mm sur le diamètre a pour conséquence une diminution de la capacité d'absorption maîtrisée. Le volume déposé doit imprégner la totalité du papier mais sans débordement.

Pour la suite des expérimentations, un papier sous forme de disque de 20 mm de diamètre qui permet de déposer au-delà 200 µL d'échantillon sanguin sera recherché. En effet la manipulation de disques de diamètre supérieur, 30 à 50 mm peut vite devenir délicate. Ainsi le papier buvard selon l'invention doit avoir une capacité d'absorption d'au moins 60 µL.cm⁻².

Les différents papiers mentionnés dans le tableau 1 sont testés avec trois volumes de sérums différents : 100, 200 et 500 µL. Ces volumes peuvent correspondre aux prises d'essai nécessaires pour un test sur automate d'immunoanalyse.

**Tableau 3 : Diamètre de diffusion (mm) selon le papier et le volume déposé**

| Référence (Grade) | 100 µL | 200 µL | 500 µL |
|---|---|---|---|
| 270 | 11 | 14 | 18 |
| 320 | 12 | 15 | 19 |
| 350 | 13 | 17 | 25 |
| 167L | 13 | 17 | 26 |
| 222 | 14 | 19 | 29 |
| 226 | 16 | 24 | 36 |
| TNF | 16 | 23 | 37 |

Après dépôt du sérum, le diamètre de diffusion pour chaque papier a été mesuré. Compte tenu du diamètre choisi pour le papier, au-delà 20 mm de diamètre de diffusion il est considéré que le papier n'est plus capable d'absorber le sérum. Autrement dit le papier doit avoir une capacité d'absorption d'au moins 60 µL.cm⁻² d'un échantillon de sang.

Les résultats montrent que le grades 270, 320, 350, 167L et 222 répondent aux exigences de l'invention. Alors que pour les grades correspondants au 903 Whatman^{®} classiquement utilisé en DBS, c'est-à-dire le 226 et TNF, ce n'est pas le cas.

### b) Solution d'extraction

Ensuite la solution d'extraction qui permet la récupération des analytes qui ont été absorbés dans les fibres du papier buvard durant le séchage, a été étudiée.

Comme indiqué précédemment, cette solution a une double fonction à savoir de permettre l'extraction des analytes initialement présents dans l'échantillon de départ sans les dénaturer et de mimer la matrice sanguine de l'échantillon initial pour en permettre l'analyse sur automate d'immunoanalyse. Le tout permettant de conserver le statut clinique de l'échantillon de départ.

Ainsi dans le cadre de l'invention une solution d'extraction de formulation simple, la plus physiologique possible, ne dégradant pas les analytes piégés, est recherchée.

Dix formulations de solution d'extraction sont testées. Dans un premier temps l'impact de ces différentes solutions sur un sérum avec mise en évidence de leur performance de diluant non toxique sur la structure des analytes, est observé.

L'étude de la non toxicité de la solution d'extraction est effectuée par des tests sur sérums purs et dilués au demi dans chaque solution d'extraction. La non toxicité d'une solution est confirmée si le rapport entre le signal en RFV du sérum pur et celui du dilué au demi est inférieur à deux.

Ces solutions d'extraction sont testées sur des différents échantillons de sérum ayant des quantités en analytes différentes. Le tableau ci-dessous représente le signal obtenu sur VIDAS^{®} pour chaque échantillon de sérum pur et dilué dans une solution d'extraction.

**Tableau 4 : Composition et efficacité des tampons d'extraction**

| | Sérum 1 (≥500 RFV) | | | Sérum 2 (≥500 RFV) | | | Sérum 3 (≥1000 RFV) | | |
|---|---|---|---|---|---|---|---|---|---|
| | 1 | 1/2 | rapport (sérum purs/sérum dilué) | 1 | 1/2 | rapport (sérum purs/sérum dilué) | 1 | 1/2 | rapport (sérum purs/sérum dilué) |
| PBS 50mM NaCl 154mM Tween20 0.05% BSA 5% | 758 | 495 | 1,53 | 695 | 401 | 1,73 | 1003 | 810 | 1,24 |
| PBS 50mM NaCl 154mM Triton 1% BSA 5% | 758 | 555 | 1,37 | 695 | 515 | 1,35 | 1003 | 940 | 1,07 |
| PBS 50mM NaCl 154mM Urée 1M BSA 5% | 758 | 476 | 1,59 | 695 | 396 | 1,76 | 1003 | 751 | 1,34 |
| PBS 50mM NaCl 308 mM Tween20 0.05% BSA 5% | 758 | 459 | 1,65 | 695 | 435 | 1,60 | 1003 | 784 | 1,28 |
| PBS 50mM NaCl 154 mM Tween20 0.5% BSA 5% | 758 | 524 | 1,45 | 695 | 414 | 1,68 | 1003 | 799 | 1,26 |
| PBS 50mM NaCl 154 mM Tween20 5% BSA 5% | 758 | 505 | 1,50 | 695 | 407 | 1,71 | 1003 | 805 | 1,25 |
| PBS 10mM NaCl 154 mM Tween20 0.05% BSA 5% | 758 | 503 | 1,51 | 695 | 389 | 1,79 | 1003 | 779 | 1,29 |
| PBS 150mMNaCl 154 mM Tween20 0.05% BSA 5% | 758 | 469 | 1,62 | 695 | 398 | 1,75 | 1003 | 853 | 1,18 |
| Tris 10mM NaCl 154 mM Régilait 0.3% | 758 | 421 | 1,80 | 695 | 358 | 1,94 | 1003 | 764 | 1,31 |
| PBS 50mM NaCl 154 mM Tween20 0.05% | 758 | 401 | 1,89 | 695 | 377 | 1,84 | 1003 | 751 | 1,34 |

| | Sérum 4 (≥1000 RFV) | | | | | | | | |
|---|---|---|---|---|---|---|---|---|---|
| | 1 | 1/2 | rapport (sérum purs/sérum dilué) | | | | | | |
| PBS 50mM NaCl 154mM Tween20 0.05% BSA 5% | 1019 | 598 | 1,70 | | | | | | |
| PBS 50mM NaCl 154mM Triton 1% BSA 5% | 1019 | 673 | 1,51 | | | | | | |
| PBS 50mM NaCl 154mM Urée 1M BSA 5% | 1019 | 621 | 1,64 | | | | | | |
| PBS 50mM NaCl 308 mM Tween20 0.05% BSA 5% | 1019 | 590 | 1,73 | | | | | | |
| PBS 50mM NaCl 154 mM Tween20 0.5% BSA 5% | 1019 | 647 | 1,57 | | | | | | |
| PBS 50mM NaCl 154 mM Tween20 5% BSA 5% | 1019 | 671 | 1,52 | | | | | | |
| PBS 10mM NaCl 154 mM Tween20 0.05% BSA 5% | 1019 | 625 | 1,63 | | | | | | |
| PBS 150mMNaCl 154 mM Tween20 0.05% BSA 5% | 1019 | 573 | 1,78 | | | | | | |
| Tris 10mM NaCl 154 mM Régilait 0.3% | 1019 | 625 | 1,63 | | | | | | |
| PBS 50mM NaCl 154 mM Tween20 0.05% | 1019 | 549 | 1,86 | | | | | | |

Au vu de ce qui précède, les solutions d'extractions n'ont pas d'effet toxique sur les sérums. Ainsi ces solutions ne dénaturent pas les analytes contenus dans l'échantillon tout en reproduisant des conditions physiologiques permettant ainsi leur analyse sur automates d'analyse.

### c) Dispositifs d'extraction

Dans le but de résoudre le problème technique, à savoir extraire les analytes absorbés dans un papier buvard sans les dénaturer mais tout en conservant le statut clinique de l'échantillon de départ, le procédé de l'invention comprend une étape d'action mécanique d'essorage.

Afin d'illustrer l'invention et uniquement à titre d'exemple deux dispositifs sont utilisés pour exercer l'action mécanique sur le papier selon le procédé de l'invention.

Les deux dispositifs basés sur une extraction par pression permettent de récupérer un volume suffisant pour un test VIDAS^{®}.

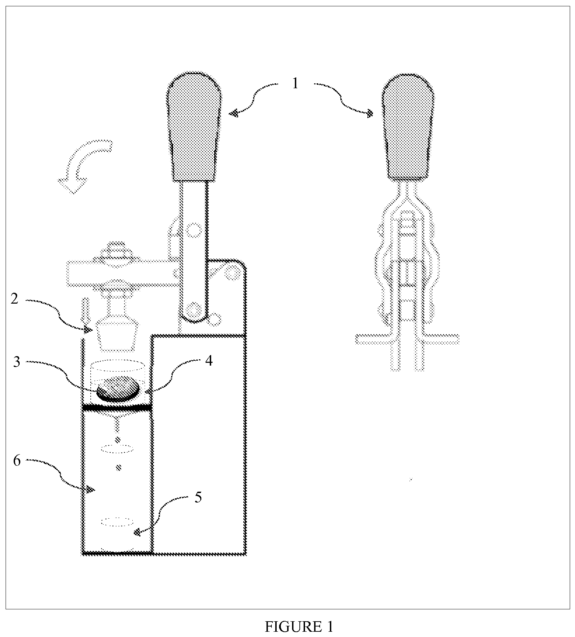

Le premier dispositif, représenté à la figure 1, comprend un levier 1 et un élément faisant office de piston 2, imperméable aux liquides et assurant une étanchéité avec les parois latérales d'un récipient 3, apte à coopérer avec ledit récipient 3.

Comme représenté à la figure 1, l'actionnement du levier 1 permet à l'élément faisant office de piston 2 d'exercer une action mécanique d'essorage sur le papier buvard 3 imprégné de la solution d'extraction dans le récipient 4. La solution d'extraction 5 issue de l'action d'essorage comprenant les analytes contenus dans l'échantillon sanguin initial est récupéré dans un contenant 6.

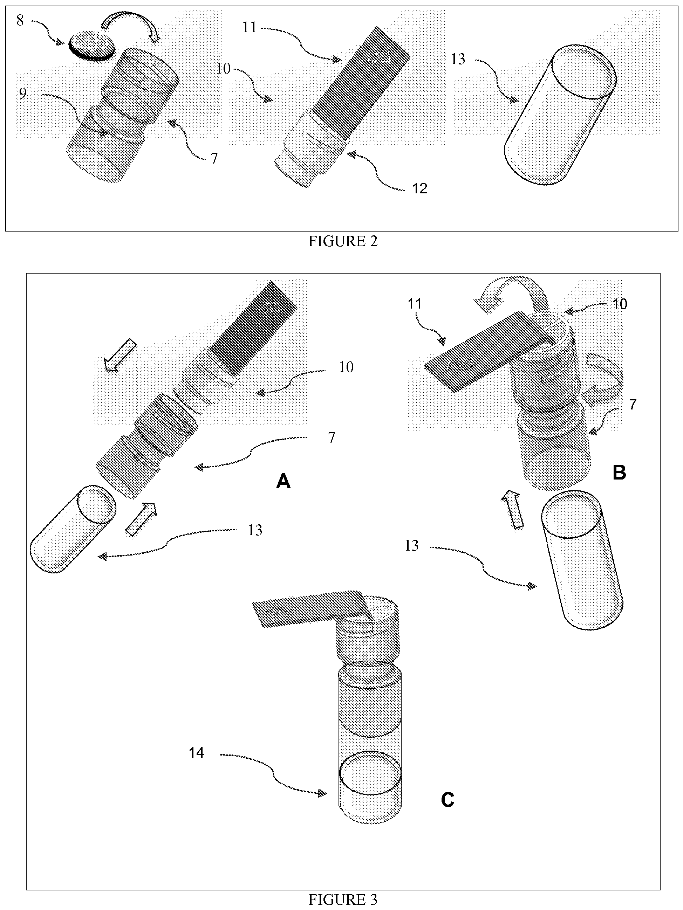

Le deuxième dispositif, représenté aux figures 2 et 3, comprend :
- un récipient 7 adapté pour contenir au moins un papier buvard 8 et une solution liquide, ledit récipient ayant un fond plat comprenant un trou d'évent 9 situé sur sa partie inférieure pour laisser passer la solution d'extraction 14,
- un élément supérieur 10 faisant office de piston, imperméable aux liquides et assurant une étanchéité avec les parois latérales du récipient 7, comprenant une manette de serrage 11 et pourvu d'un filetage 12 adapté pour coopérer par vissage avec le récipient 7, et
- un élément inférieur 13 permettant de récupérer la solution d'extraction 14 comprenant les analytes contenus dans l'échantillon sanguin initial.

Comme représenté à la figure 3A, le récipient 7, comprenant le papier buvard 8 et la solution d'extraction 14, coopère d'une part avec l'élément supérieur 10 faisant office d'extraction 14. Une fois ces trois éléments assemblés, la manette de serrage 11 est abaissée, comme illustré à la figure 3B, pour permettre le vissage de l'élément supérieur 10 avec le récipient 7 et multipliant ainsi la force exercée. La figure 3C montre la solution d'extraction récupérée 14 suite à l'action mécanique d'essorage exercé sur le papier buvard 8 par l'élément supérieur 10.

Les deux dispositifs basés sur une extraction par pression permettent de récupérer un volume suffisant, supérieur ou égal à 100 µL, pour un test VIDAS^{®}. Le premier système, qui sera appelé Dispositif 1 par la suite, est une sauterelle à serrage vertical permettant d'appliquer une pression uniforme de 100 N, permet de récupérer au moins 70% du volume de solution déposé, soit plus de 400 µL extraits pour 600 µL déposés. Il permet une extraction reproductible car il fonctionne indépendamment de la force de l'utilisateur. Le second système, qui sera appelé Dispositif 2 par la suite, permet quant à lui de récupérer au moins 50% des volumes.
de piston et d'autre part avec l'élément inférieur 13 permettant de récupérer la solution

**Tableau 5: Volume de solution d'extraction récupéré en fonction du dispositif utilisé**

| | Dispositif 1 | | Dispositif 2 | |
|---|---|---|---|---|
| | Volume récupéré (µL) | Rapport | Volume récupéré (µL) | Rapport |
| Volume déposé 600 µL | 424 | 0.71 | 322 | 0.54 |

Le Dispositif 1 et les papiers, d'un diamètre de 20 mm, de grades 222, 350 et 270 seront utilisés pour l'expérience suivante.

L'échantillon sérique d'un patient séropositif à la varicelle, autrement dit dont le statut clinique est positif pour la varicelle, est testé dans un premier temps sur le VIDAS^{®} afin d'établir la valeur de son signal. On l'appellera par la suite signal initial. En second lieu, on réalise selon l'invention l'étape de dépôt et de séchage sur papier avant de mettre en oeuvre l'étape d'extraction, à l'aide de la solution d'extraction, dont le volume est équivalent au volume d'échantillon déposé, et du Dispositif 1, puis le test VIDAS^{®}. Le résultat donné par le VIDAS^{®} sera le signal récupéré. La valeur du signal initial et celles des signaux récupérés en RFV, le statut clinique et le pourcentage de signal sont présentés dans le tableau ci-dessous.

**Tableau 6 : Test de récupération du signal et de conservation du statut clinique**

| | | Test de récupération du signal et de conservation du statut clinique | | | | | |
|---|---|---|---|---|---|---|---|
| Grade Papier | | 222 | | 350 | | 270 | |
| Durée de séchage | | 1h30 | | 2h | | 2h | |
| Température de séchage | | 25°C | | | | | |
| Solution d'extraction | | PBS 50mM NaCl 154 mM Tween20 0.05% | | | | | |
| Volume de sérum déposé 2 disques (µL) | | 600 | | 700 | | 1000 | |
| Volume de solution d'extraction 2 disques (µL) | | 600 | | 700 | | 1000 | |
| Temps réimprégnation (min) | | 2 | | | | | |
| Signal initial (RFV) | Statut clinique initiale | 1428 | positif | 1428 | positif | 1428 | positif |
| RFV récupéré (RFV) | Statut clinique récupéré | 1413 | positif | 1195 | positif | 1195 | positif |
| Signal récupéré (%) | | 98,95 | | 83,68 | | 83,68 | |

Les résultats montrent que l'échantillon extrait, à l'aide de la solution d'extraction et du dispositif 1, est en volume suffisant pour permettre le test VIDAS^{®}VZG. Sans dilution de l'échantillon, c'est-à-dire que le volume initiale d'échantillon est exactement le même que le volume de solution d'extraction (volume déposé = volume de solution d'extraction), le signal récupéré reste important. En effet il reste supérieur à 80% du signal initial.

De plus le statut clinique de l'échantillon récupéré est le même que celui de l'échantillon initial, c'est-à-dire positif. Autrement dit l'échantillon récupéré suite à l'étape d'extraction reste séropositif à la varicelle tout comme l'échantillon initial. Ainsi le statut clinique est bien conservé.

Ces résultats montrent également que deux minutes de temps de ré-imprégnation du papier par la solution d'extraction sont suffisantes pour obtenir un signal satisfaisant (supérieur à 80%). Ce temps permet à la solution d'extraction de diffuser dans les fibres du papier qui est ainsi mieux réhydraté, ce qui améliore la libération des analytes piégés.

Les différents essais réalisés en parallèle avec les autres solutions d'extraction, citées dans le tableau 4, montrent qu'elles permettent elles également d'obtenir un signal supérieur à 80% du signal initial (non montré).

Par conséquent le procédé de l'invention permet de conserver le statut clinique d'un échantillon initial dans le cadre de l'utilisation de la technologie DBS sur automate d'immunoanalyse. En effet malgré les volumes élevés déposés sur papier buvard (300, 350 et 500 µL), 80% des analytes contenus initialement dans l'échantillon de départ sont présents dans les échantillons récupérés ce qui permet de conserver le statut clinique de l'échantillon initial.

Dans le but de montrer la reproductibilité du procédé selon l'invention, les inventeurs ont prouvé qu'il fonctionne également dans le cadre de détections d'autres types d'infections.

Pour les tests suivants, les mêmes conditions expérimentales que celles montrées dans le tableau 6 sont utilisées.

### II. Transposition du procédé selon l'invention sur le test du VIH

Dans le but de montrer la reproductibilité du procédé, le diagnostic du virus du SIDA est étudié.

Les virus de l'immunodéficience humaine (VIH1 et VIH2), sont des rétrovirus à ARN. Il s'agit d'une infection des cellules CD4⁺ (lymphocytes T, macrophages).

Le diagnostic d'une infection à ce virus repose sur la détection simultanée de l'antigène p24 du VIH-1, présent les trois premières semaines entre le moment de la contamination et l'apparition des premiers anticorps et la détection des anticorps anti VIH-1 et VIH-2, ce qui permet une surveillance de la fenêtre de séroconversion.

Au vu des résultats précédents, le procédé selon l'invention permet le diagnostic pour les échantillons positifs nets. En effet, avec un procédé permettant la récupération de 60-70% d'échantillon extrait et plus de 80% de réponse RFV, le risque d'un changement d'interprétation clinique, du statut de positif à négatif est improbable. La situation est différente pour les échantillons positifs faibles et équivoques qui sont plus facilement susceptibles de changer de statut clinique, ce qui est le cas dans le cadre d'un diagnostic du virus du SIDA.

A titre illustratif, des analyses des échantillons à l'aide de l'automate d'immunoanalyse commercialisé par l'entreprise bioMérieux, le système VIDAS^{®}, sont effectuées. Le kit VIDAS^{®}HIV DUO Quick, qui permet le diagnostic de ce virus, nécessite une forte prise d'essai (200 µL) et est adapté à la détection des très faibles quantités d'analytes.

On cherche à pouvoir dépister l'infection au plus près de la contamination, donc lorsque le taux en anticorps est encore faible. Pour le kit VIDAS^{®}HIV DUO Quick, l'indice limite (*cut off*) qui correspond au seuil de positivité est de 125 RFV. Autrement dit un échantillon ayant un indice supérieur à 125 RFV est diagnostiqué comme étant séropositif au virus du SIDA.

Pour cette expérience, 500 µL de sérums sont déposés sur du papier, de diamètre 20 mm et de grade 222, et séchés pendant 1h30 à 30°C. Pour l'étape d'extraction, on laisse imprégner le papier dans 500 µL de solution d'extraction (PBS 50mM NaCl 154 mM Tween20 0,05%) pendant une durée de 2 minutes. Les deux dispositifs sont utilisés pour l'étape d'action mécanique d'essorage sur le papier.

L'échantillon sérique utilisé pour l'expérience est séropositif pour au VIH. La valeur du signal initial et celles des signaux récupérés en RFV, le statut clinique et le pourcentage de signal sont présentés dans le tableau ci-dessous.

**Tableau 7 : Etude de la limite de détection pour l'HIV**

| | | Dispositif 1 | | | | Dispositif 2 | | | |
|---|---|---|---|---|---|---|---|---|---|
| Signal initial (RFV) | Statut clinique initiale | 196 | Positif | 196 | Positif | 196 | Positif | 196 | Positif |
| RFV récupéré (RFV) | Statut clinique récupéré | 148 | Positif | 147 | Positif | 138 | Positif | 134 | Positif |
| Signal récupéré (%) | | 76 | | 75 | | 70 | | 67 | |

Les résultats montrent que le signal récupéré tourne autour de 70% après utilisation du procédé selon l'invention. Le signal récupéré est inférieur à celui obtenu dans VIDAS^{®} VZG néanmoins il permet toujours de conserver le statut clinique d'origine. En effet, les échantillons récupérés suite à l'étape d'extraction reste séropositifs au VIH.

### III. Transposition du procédé selon l'invention sur les tests du HBV et HCV

Le virus de l'hépatite B (HBV) est un virus à ADN se composant d'une enveloppe lipidique externe et d'une nucléocapside protéique renfermant l'ADN viral. L'enveloppe contient des protéines HBs qui sont ancrées et exposées à la surface du virus afin de permettre les étapes de fixation et de pénétration dans les hépatocytes.

Suite à une infection au virus HBV, l'antigène HBs (Ag HBs) apparait après plusieurs jours et peut persister plusieurs mois (= infection chronique). Habituellement, la disparition de l'Ag HBs est suivie par l'apparition d'anticorps anti-HBs. La recherche des anticorps s'effectue dans les suivis des patients infectés mais aussi pour vérifier l'efficacité de la vaccination HBV.

Les analyses des échantillons sont réalisées à l'aide de l'automate d'immunoanalyse commercialisé par l'entreprise bioMérieux le système VIDAS^{®} et le test VIDAS^{®} HBs Ag.

Pour une détection des antigènes HBs du virus de l'hépatite B avec le kit VIDAS^{®} HBs Ag, 150 µL de sérum sont nécessaires. Le test utilisé est le kit VIDAS^{®} HBs Ag Ultra, commercialisé par l'entreprise bioMérieux, qui définit un indice seuil de positivité à 80 RFV. Le seuil est donc très bas dans l'échelle de lecture RFV du VIDAS^{®}.

500 µL de sérums sont déposés sur du papier, de diamètre 20 mm et de grade 222, et séchés pendant 1h30 à 30°C. L'étape d'imprégnation du papier se fait dans 500 µL de solution d'extraction (PBS 50mM NaCl 154 mM Tween20 0,05%) pendant une durée de 2 minutes. Les dispositifs 1 et 2 sont utilisés pour l'étape d'action mécanique d'essorage sur le papier.

L'échantillon sérique utilisé pour l'expérience est séropositif pour au virus de l'hépatite B. La valeur du signal initial et celles des signaux récupérés en RFV, le statut clinique et le pourcentage de signal sont présentés dans le tableau ci-dessous.

**Tableau 8 : Etude de la limite de détection pour l'HBV**

| | | Dispositif 1 | | | | Dispositif 2 | | | |
|---|---|---|---|---|---|---|---|---|---|
| Signal initial (RFV) | Statut clinique initiale | 117 | Positif | 117 | Positif | 117 | Positif | 117 | P |
| RFV récupéré (RFV) | Statut clinique récupéré | 98 | Positif | 96 | Positif | 97 | Positif | 93 | P |
| Signal récupéré (%) | | 84 | | 82 | | 83 | | 79 | |

Les résultats montrent que sur un échantillon sérique caractérisé comme étant proche du seuil de positivité, le statut clinique reste positif pour le virus HBV dans tous les cas de figures.

### IV. Transposition du procédé de l'invention sur le test du HCV

Le virus de l'hépatite C (HCV) découvert par des méthodes de biologie moléculaire, affecte tous les pays. L'infection par le HCV évolue souvent en une hépatite C chronique (environ 80%), exposant la personne infectée aux risques de complications hépatiques. Le kit VIDAS^{®} Anti-HCV, commercialisé par bioMérieux, est un test qualitatif permettant la détection des anticorps immunoglobulines G dirigés contre ce virus. Pour ce test l'indice du seuil de positivité est très élevé, il est défini à 1745 RFV.

Pour cette expérience, 500 µL de sérums sont déposés sur du papier, de diamètre 20 mm et de grade 222, et séchés pendant 1h30 à 30°C. Pour l'étape d'extraction, on laisse imprégner le papier dans 500 µL de solution d'extraction (PBS 50mM NaCl 154 mM Tween20 0,05%) pendant une durée de 2 minutes. Les deux dispositifs sont utilisés pour l'étape d'action mécanique d'essorage sur le papier.

L'échantillon sérique utilisé pour l'expérience est séropositif pour au virus de l'hépatite C. La valeur du signal initial et celles des signaux récupérés en RFV, le statut clinique et le pourcentage de signal sont présentés dans le tableau ci-dessous.

**Tableau 9 : Etude de la limite de détection pour l'HCV**

| | | Dispositif 1 | | | | Dispositif 2 | |
|---|---|---|---|---|---|---|---|
| Signal initial (RFV) | Statut clinique initiale | 1921 | P | 1921 | P | 1921 | P |
| RFV récupéré (RFV) | Statut clinique récupéré | 1898 | P | 1856 | P | 1978 | P |
| Signal récupéré (%) | | 99 | | 97 | | 91 | 103 |

Dans ce cas de figure l'indice limite est très élevé (1745 RFV), néanmoins nous pouvons remarquer que le statut demeure identique entre l'échantillon initial et l'échantillon récupéré suite au procédé selon l'invention. Ce dernier est donc applicable.

## Revendications

1. Procédé de mise en suspension des analytes contenus dans un échantillon sanguin préalablement séché sur un papier buvard, dans lequel :
on dispose d'un papier buvard sur lequel un échantillon sanguin, d'un volume initial supérieur ou égal à 100 µL, est séché, ledit papier buvard ayant une capacité d'absorption dudit échantillon d'au moins 60 µL.cm⁻² et un grammage compris entre 200 g.m⁻² et 800 g.m⁻² ;
- on transfert ledit papier buvard dans un récipient,
- on ajoute une solution d'extraction liquide dans ledit récipient, ladite solution d'extraction étant choisie parmi :
∘ un tampon phosphate salin ayant une concentration en phosphate comprise entre 10 mmol.L⁻¹ et 150 mmol.L⁻¹ et une concentration en chlorure de sodium comprise entre 150 mmol.L⁻¹ et 350 mmol.L⁻¹ et
∘ un tampon tris salin ayant une concentration en tris comprise 10 mmol.L⁻¹ et 150 mmol.L⁻¹ et une concentration en chlorure de sodium comprise entre 150 mmol.L⁻¹ et 350 mmol.L⁻¹,
ladite solution d'extraction ayant un volume équivalent au volume d'échantillon sanguin séché sur le papier buvard ;
- on laisse imprégner ledit papier buvard dans la solution d'extraction,
- on exerce une action mécanique d'essorage sur ledit papier buvard ; et
- on récupère la solution d'extraction comprenant les analytes contenus dans l'échantillon sanguin initial.

2. Procédé selon la revendication 1, dans lequel le pH de la solution d'extraction est compris entre 7,2 et 7,5, de préférence entre 7,3 et 7,4.

3. Procédé selon la revendication 1 ou 2, dans lequel la solution d'extraction comprend en outre des détergents et/ou des protéines porteuses et/ou des chélateurs d'ions et/ou de la poudre de lait.

4. Procédé selon l'une quelconque des revendications 1 à 3, dans lequel l'étape d'imprégnation du papier dans la solution d'extraction a une durée comprise entre 1 minute et 3 minutes, de préférence est de 2 minutes.

5. Procédé selon l'une quelconque des revendications 1 à 4, dans lequel le papier buvard est un matériau fibreux non tissé comprenant des fibres choisies parmi les fibres de celluloses et les fibres de verres.

6. Procédé selon l'une quelconque des revendications 1 à 5, dans lequel le papier buvard a une épaisseur comprise entre 0,8 mm à 2,50 mm.

7. Procédé selon l'une quelconque des revendications 1 à 6, dans lequel le papier buvard est sous forme de disque.

8. Procédé selon l'une quelconque des revendications 1 à 7, dans lequel l'action mécanique d'essorage sur le papier buvard se fait par pression mécanique manuelle.

9. Procédé selon l'une quelconque des revendications 1 à 8, dans lequel le récipient est apte à coopérer avec un moyen coulissant à l'intérieur dudit récipient, ledit moyen étant imperméable aux liquides et assurant une étanchéité avec les parois latérales du récipient.

## Patentansprüche

1. Verfahren zum Suspendieren von Analyten, die in einer zuvor auf einem Fließpapier getrockneten Blutprobe enthalten sind, wobei:
man über ein Fließpapier verfügt, auf dem eine Blutprobe mit einem Ausgangsvolumen von mehrt als oder gleich 100 µl getrocknet worden ist, wobei das Fließpapier eine Absorptionskapazität für die Probe von mindestens 60 µl.cm⁻² und ein Flächengewicht zwischen 200 g.m⁻² und 800 g.m⁻² aufweist,
- man das Fließpapier in einen Behälter überführt,
- man eine flüssige Extraktionslösung in den Behälter zugibt, wobei die Extraktionslösung aus Folgenden ausgewählt ist:
∘ einer phosphatgepufferten Salzlösung mit einer Phosphatkonzentration zwischen 10 mmol.l⁻¹ und 150 mmol.l^{-1 1} und einer Natriumchloridkonzentration zwischen 150 mmol.l⁻¹ und 350 mmol.l⁻¹ und
∘ einer Tris-gepufferten Salzlösung mit einer Tris-Konzentration zwischen 10 mmol.l⁻¹ und 150 mmol.l⁻¹ und einer Natriumchloridkonzentration zwischen 150 mmol.l⁻¹ und 350 mmol.l⁻¹,
wobei die Extraktionslösung ein Volumen aufweist, das gleich dem Volumen der auf dem Löschpapier getrockneten Blutprobe ist,
- man das Fließpapier in der Extraktionslösung durchtränken lässt,
- man eine mechanische Wringwirkung auf das Fließpapier ausübt und
- man die Extraktionslösung gewinnt, die die in der Ausgangs-Blutprobe enthaltenen Analyten umfasst.

2. Verfahren nach Anspruch 1, wobei der pH-Wert der Extraktionslösung zwischen 7,2 und 7,5, vorzugsweise zwischen 7,3 und 7,4 beträgt.

3. Verfahren nach Anspruch 1 oder 2, wobei die Extraktionslösung außerdem Detergenzien und/oder Trägerproteine und/oder Ionenchelatoren und/oder Milchpulver umfasst.

4. Verfahren nach einem der Ansprüche 1 bis 3, wobei der Schritt des Durchtränkens des Papiers in der Extraktionslösung eine Dauer zwischen 1 Minute und 3 Minuten aufweist, vorzugsweise 2 Minuten lang ist.

5. Verfahren nach einem der Ansprüche 1 bis 4, wobei das Fließpapier ein Faservliesmaterial ist, das aus Cellulosefasern und Glasfasern ausgewählte Fasern umfasst.

6. Verfahren nach einem der Ansprüche 1 bis 5, wobei das Fließpapier eine Dicke zwischen 0,8 mm und 2,50 mm aufweist.

7. Verfahren nach einem der Ansprüche 1 bis 6, wobei das Fließpapier die Form einer Scheibe hat.

8. Verfahren nach einem der Ansprüche 1 bis 7, wobei die mechanische Wringwirkung auf das Fließpapier durch manuelles mechanisches Drücken ausgeübt wird.

9. Verfahren nach einem der Ansprüche 1 bis 8, wobei der Behälter dafür ausgelegt ist, mit einem Gleitmittel im Inneren des Behälters zusammenzuwirken, wobei das Mittel für Flüssigkeiten undurchlässig ist und eine Abdichtung mit den Seitenwänden des Behälters sicherstellt.

## Claims

1. A method for suspending the analytes contained in a blood sample previously dried on blotting paper, wherein:
- blotting paper is provided on which a blood sample, with an initial volume of greater than or equal to 100 µl, is dried, said blotting paper having a capacity for absorption of said sample of at least 60 µl.cm⁻² and a basis weight of between 200 g.m⁻² and 800 g.m⁻²;
- said blotting paper is transferred into a container;
- a liquid extraction solution is added to said container, said extraction solution being chosen from:
∘ a phosphate-buffered saline having a phosphate concentration of between 10 mmol.l⁻¹ and 150 mmol.l⁻¹ and a sodium chloride concentration of between 150 mmol.l⁻¹ and 350 mmol.l⁻¹ and
∘ a Tris-buffered saline having a Tris concentration of between 10 mmol.l⁻¹ and 150 mmol.l⁻¹ and a sodium chloride concentration of between 150 mmol.l⁻¹ and 350 mmol.l⁻¹,
said extraction solution having a volume equivalent to the volume of blood sample dried on the blotting paper;
- said blotting paper is left to impregnate in the extraction solution;
- a mechanical draining action is applied to said blotting paper; and
- the extraction solution comprising the analytes contained in the initial blood sample is recovered.

2. The method as claimed in claim 1, wherein the pH of the extraction solution is between 7.2 and 7.5, preferably between 7.3 and 7.4.

3. The method as claimed in claim 1 or 2, wherein the extraction solution also comprises detergents and/or carrier proteins and/or ion-chelating agents and/or milk powder.

4. The method as claimed in any one of claims 1 to 3, wherein the step of impregnating the paper in the extraction solution has a duration of between 1 minute and 3 minutes, preferably is 2 minutes.

5. The method as claimed in any one of claims 1 to 4, wherein the blotting paper is a nonwoven fibrous material comprising fibers chosen from cellulose fibers and glass fibers.

6. The method as claimed in any one of claims 1 to 5, wherein the blotting paper has a thickness of between 0.8 mm and 2,50 mm.

7. The method as claimed in any one of claims 1 to 6, wherein the blotting paper is in the form of a disk.

8. The method as claimed in any one of claims 1 to 7, wherein the mechanical draining action on the blotting paper is carried out by manual mechanical pressure.

9. The method as claimed in any one of claims 1 to 8, wherein the container is capable of cooperating with a means sliding inside said container, said means being impermeable to liquids and providing a seal with the side walls of the container.
